# EUROPEAN PATENT APPLICATION

(11) **EP 1 557 449 A1**
(43) Date of publication of application: **27.07.2005**
(21) Application number: 04075136.4
(22) Date of filing: 22.01.2004
(51) Int. Cl.: C09J 7/02, B32B 7/04

(54) **Adhesive tape for structural bonding**

(71) Applicant: 3M Innovative Properties Company, St. Paul, Minnesota 55133-3427 (US)
(72) Inventor: Sikkel, Bernard J., c/o 3M Europe s.a., 1831 Diegem (BE); Brandys, Frank A., c/o 3M Europe s.a., 1831 Diegem (BE); Chen, Jimmy, c/o 3M Europe s.a., 1831 Diegem (BE)
(74) Representative: Voortmans, Gilbert J.L.

(57) **Abstract**

An adhesive tape for bonding components such as, for example, in a motor vehicle. The adhesive tape comprises a continuous or discontinuous metal layer having opposite first and second major sides, each of the first and second major sides having an adhesive layer defining an adhesive surface on the first and second major sides. The adhesive layer on the first and second major sides comprises domains of pressure sensitive adhesive and domains of an activatable adhesive composition. Each of the domains define a part of the surface of the adhesive layer. A method of adhering components of motor vehicles together. The method comprises (i) providing an adhesive tape between the components to be adhered together, said adhesive tape comprising opposite first and second major adhesive surface, each of said first and second major adhesive surface being defined by an adhesive layer that comprises domains of pressure sensitive adhesive and domains an activatable adhesive composition, each of said domains defining a part of the surface of the adhesive layer; and (ii) cross-linking said domains of activatable adhesive composition.

## Description

### 1. Field of the invention.

The present invention relates to adhesive tapes for making structural joints, in particular an adhesive tape that comprises an activatable adhesive, typically a thermosetting adhesive, and to a method of bonding components in a motor vehicle.

### 2. Background of the invention.

Structural adhesives are designed to bond structural materials. Typically, bonds formed with structural adhesives cannot be reversed or broken without damaging one or the other substrate. Generally, a structural adhesive may form a bond having an overlap shear strengths in excess of ~7 MPa (~ 1000 psi) as measured by ASTM D-1002-94 although in certain application, lower bond strengths for example of at least 1 or 2 MPa may suffice to create a structural bond. Structural adhesive may be used to improve at least one of the stiffness, fatigue or impact properties of a joint compared to joints that have been mechanically fastened. Structural adhesives are frequently used when bonding metal, wood, and high-strength composites to construct a load-bearing structure. Structural adhesives can generally be expected to be able to sustain a significant percentage of its initial failure load in a hot and humid or hot and dry environment. Structural adhesives are sometimes also referred to as permanent type of adhesive or engineering adhesives. The strength and permanence of structural adhesives is frequently achieved using a cross-linkable or thermosetting adhesive, i.e. a composition that can be cured to a cross-linked state to form a permanent bond typical of structural adhesives. Other kinds of structural adhesives include thermoplastic adhesives or heat-activatable adhesives that form a permanent bond upon heating of the adhesive without an activating reaction taking place. Epoxies are one of the most widely used classes of structural adhesive chemistry, but acrylates, polyurethanes, phenolics, and other classes have been used to great advantage as well as combinations of different chemistries.

Structural adhesives have been used in structural bonding of components in motor vehicles (e.g., cars, trucks, etc.), aircraft as well as in construction applications (e.g., buildings). In motor vehicles, for example, structural adhesives have been used to bond panels such as side panels to a frame as well as to bond for example door handles, mirrors and the like to the body of the vehicle. Structural adhesives are often used to provide additional stiffness fatigue and impact performance to body components and may be used in bonding stiffeners such as striker pin reinforcements; door handle reinforcements and other types of reinforcement brackets in vehicles where higher strength, stiffness or fatigue properties are required than may be available from other methods of joining such as welding, braising or riveting for the same substrate thickness.

A disadvantage of structural adhesives is generally that they have no or limited adhesive properties in the uncured state, i.e. before they are cross-linked. As a result, when bonding components together the respective components may need to be clamped and held together until the adhesive is cured. This is particularly the case when the components are in a vertical position when bonding them together or in situations where there is no possibility of providing additional support by means of clamping, riveting or spot welding or other method of fixturing. This problem has been approached in various ways in the art. For example hybrid systems of a pressure sensitive adhesive and a structural adhesive have been disclosed to provide an adhesive system that has the characteristics of a pressure sensitive adhesive and a structural bonding adhesive combined. For example, EP 942 054 discloses a hybrid system comprising a layer of pressure sensitive adhesive and a curable or activatable adhesive.

US 5,593,759 discloses an adhesive tape having a core of a partially cured structural adhesive that is provided on one or both sides with a thin layer of pressure sensitive adhesive. The tape is tacky at room temperature so that a temporary bond can be created under ambient conditions. Upon activating of the structural adhesive, the final bond strength typical of a structural adhesive is created.

US 5,086,088 discloses an acrylic ester/epoxy resin pressure-sensitive thermosetting adhesive, for use in structural bonding of components to metal surfaces or for the sealing of metal seams. The adhesives are formulated to offer excellent adhesion to metal and painted surfaces, including oily metal surfaces, as well as high shear and peel strengths and excellent storage properties.

US 5,585,178 discloses an adhesive tape that comprises an adhesive layer comprising two different adhesives and wherein one of the adhesives extends laterally continuously and the other extends discontinuously. In one of the embodiments, one of the adhesives can be a pressure sensitive adhesive and the other a curable adhesive.

US 6,565,969 discloses an adhesive article comprising a bondable layer having on at least one major surface a layer of pressure sensitive adhesive, wherein the bondable layer comprises a thermosetting material, a thermoplastic material, or a hybrid material, wherein the pressure sensitive adhesive layer substantially retains pressure sensitive adhesive characteristics after storage at room temperature for at least about three months prior to bonding the adhesive article, and the adhesive article has an overlap shear measured at room temperature according to ASTM D-1002-94 of at least about 6.9 MPa after bonding as well as a method for making an adhesive article.

JP 03-14888 discloses an adhesive sheet that comprises on a non-woven cloth or on a film backing areas of a curable adhesive and areas of a pressure sensitive adhesive on the same side of the sheet. The areas of curable adhesive and areas of pressure sensitive adhesive can be on only one or both sides of the sheet. It is disclosed that this allows for the adhesive sheet to bond at normal conditions and allows for increasing the strength of the bond upon activating of the areas of curable adhesive.

Notwithstanding the various solutions disclosed in the art using hybrid constructions of a pressure sensitive adhesive and a structural bonding adhesive, there remain problems to be solved, in particular in respect of bonding components of a motor vehicle. For example, when a motor vehicle is involved in a crash, there is the potential for bonded components to dislodge from the vehicle thereby creating danger for anyone near the crash. It would thus be desirable to improve the impact strength of the structural bond created. Additionally, in the manufacturing of motor vehicles, components to be bonded together are frequently in a vertical position requiring clamping of the components. Although, the art has sought to solve this problem using a hybrid construction of a pressure sensitive adhesive and a curable adhesive. But, the curable adhesive frequently will be a heat curable adhesive and during the heat cycle, the pressure sensitive adhesive may still fail to hold the components together until a sufficiently strong bond is created through the curable adhesive, which often shows a reduction in viscosity which promotes wetting; enhances adhesion and facilitates oil absorption or displacement. Furthermore, in the automotive industry, components, in particular metal components may be covered with oil, which may reduce the capability of the pressure sensitive adhesive to hold the components together while activating the curable adhesive.

It would thus be desirable to find a further structural adhesive that provides good impact strength and/or that is capable of holding components together without clamping during the activating cycle of the structural adhesive. It will generally also be desired that such adhesive can be in tape form and be conveniently manufactured in a cost effective way. Desirably, the adhesive tape will be compatible with manufacturing procedures used in the automotive industry, in particular be capable of also bonding components with an oily surface.

### 3. Summary of the invention.

The present invention provides in one aspect, an adhesive for bonding components in a motor vehicle. The adhesive can be in tape form and comprise a continuous or discontinuous metal layer having opposite first and second major sides, each of the first and second major sides having an adhesive layer defining an adhesive surface on the first and second major sides. The adhesive layer on the first and second major sides comprises domains of pressure sensitive adhesive and domains of an activatable adhesive composition. Each of the domains define a part of the surface of the adhesive layer.

It has been found that the adhesive tape can be used to hold components together without the need for clamping while activating the activatable adhesive composition, in particular if the activatable adhesive composition is activated by heating. In particular, it has been found that the use of the metal layer provides excellent bond strength during the activation of the activatable adhesive even under high loads. Furthermore, the structure of domains of activatable adhesive composition and domains of pressure sensitive adhesive can provide bonds that have improved impact resistance in comparison to a bond created with only the activatable adhesive. This effect is independent of the use of the metal foil and provides in particular advantages when bonding components of a motor vehicle together. Thus, if only the impact strength of the bond is of concern, the metal foil may be left out to create a layer comprising the domains of the pressure sensitive adhesive and activatable adhesive. Such layer may be supported on both sides with a release liner that is removed prior to bonding components together. Alternatively, one may use another support such as paper, woven or non-woven of a plastic film instead of the metal foil.

Accordingly, in a further aspect, the present invention provides a method of adhering components of motor vehicles together. The method comprises (i) providing an adhesive tape between the components to be adhered together, said adhesive tape comprising opposite first and second major adhesive surface, each of said first and second major adhesive surface being defined by an adhesive layer that comprises domains of pressure sensitive adhesive and domains an activatable adhesive composition, each of said domains defining a part of the surface of the adhesive layer; and (ii) cross-linking said domains of activatable adhesive composition.

By the term 'pressure sensitive adhesive' as used in connection with the present invention, there is meant an adhesive that forms an adhesive bond upon the application of pressure. Generally it will be desired that the pressure sensitive adhesive is capable of forming shear strength of at least 0.5MPa preferably, at least 1.0Mpa (ASTM D-1002-94) upon the application of pressure at ambient temperature, i.e. 20 to 40°C.

By the term 'activatable adhesive' is meant an adhesive composition that requires activation to form a bond, in particular a permanent bond. By 'activation' is meant that the adhesive composition is exposed to heat or is irradiated with for example UV, visible light or e-beam to cause the bond to form. Generally, a structural bond should be formed that has a shear strength of at least 2 Mpa, preferably at least 6.9Mpa, more preferably at least 15MPa measured according to ASTM D-1002-94. The activatable adhesive composition may or may not have pressure sensitive adhesive properties, although, when present, these may not be retained on oily substrates nor will these properties generally be retained through a typical activation cycle used in forming a permanent or structural bond.

### 4. Brief description of the drawings

The invention is illustrated with reference to schematic drawings representing certain embodiments of the invention without however the intention to limit the invention thereto:
Figure 1 and 2 shows a top view of two different embodiments of the adhesive tape.
Figure 3 is a cross-section along line A-B of the tape shown in figure 1
Figure 4 shows the cross-section of an alternative embodiment of the adhesive tape.

### 5. Detailed description

The adhesive tape in connection with the present invention comprises in one embodiment, a metal layer. The metal layer may extend as a continuous layer throughout the adhesive tape or the metal foil may extend discontinuous along one or both orthogonal axes that are parallel to the major surface of the adhesive tape. On both opposite major sides of the metal layer, the adhesive tape has an adhesive layer defining adhesive surfaces on both major sides of the adhesive tape. In accordance with the present invention, the adhesive surface of the adhesive layer is defined by domains of pressure sensitive adhesive and domains of activatable adhesive. Thus, the domains of the activatable adhesive and pressure sensitive adhesive are arranged in a single layer extending across the length of the adhesive tape, rather than the pressure sensitive adhesive being arranged in a discontinuous or continuous way on a layer of the activatable adhesive.

The domains of pressure sensitive adhesive provide a tacky surface so that the tape can be used to adhere two components together by application of pressure. Typically, the pressure sensitive adhesive will be tacky and capable of adhering components together in a temperature range of 5 to 200°C, typically between 10 and 150°C. The activatable adhesive when activated will provide the final bond strength of the components that are bonded together by the adhesive tape. During activation, there may be an overlap in properties where the pressure sensitive adhesive is decreasing in strength due to activation by for example an increasing temperature and the activatable adhesive is increasing in strength.

Generally, the domains of pressure sensitive adhesive and the domains of activatable adhesive composition together define the total surface of the adhesive layer. The amount of the adhesive surface made up by the pressure sensitive adhesive domains is generally designed to obtain desired properties of the adhesive tape such as final bond strength and holding power during activating of the activatable adhesive. One skilled in the art with routine experimentation can readily determine the optimal amount. Typically the amount of the adhesive surface made up by the pressure sensitive adhesive domains is between 10 and 90%, preferably between 30 and 70%. The domains of pressure sensitive adhesive and activatable adhesive may be provided in a variety of shapes, sizes and configurations. For example, in one embodiment, the domains of pressure sensitive adhesive and activatable adhesive composition may be provided as stripes or bands that are provided parallel and contiguous to each other. Alternatively, spots of activatable adhesive may be provided in a matrix of pressure sensitive adhesive enclosing the spots. Conceivably the inverse of that configuration could be employed as well whereby spots of pressure sensitive adhesive are provided in a matrix of activatable adhesive. The size and shape of the spots can be designed to obtain the desired properties of the adhesive tape. For example, the spots may have a circular shape, can be rectangular, square, hexagonal or may be provided as triangles.

The impact resistance improvement that can be obtained with an adhesive tape in connection with the present invention will typically depend on the design choices made. For example, the shape and size of the respective domains will generally influence the level of impact resistance obtained. The design choices can however be readily determined by one skilled in the art with routine experimentation to obtain a desired impact resistance.

Both major sides of the adhesive tape have an adhesive surface defined by an adhesive layer of the domains of pressure sensitive adhesive and activatable adhesive. The configuration, shape, size and arrangement of the adhesive domains need not be the same on both major sides of the adhesive tape although for convenience in the manufacturing of the adhesive tape, the adhesive surfaces on both major sides should be designed in the same way. Thus, in a particular embodiment, domains of pressure sensitive adhesive on one side will be opposite to pressure sensitive adhesive domains on the opposite side and likewise for the activatable adhesive.

The thickness of the adhesive layer is generally between 0.1 mm and 2.0mm, preferably between 0.3 mm and 1.0mm. The domains of pressure sensitive adhesive and activatable adhesive composition may be of the same thickness or different thickness.

In accordance with one of the embodiments of the present invention, the adhesive tape includes a metal layer. The metal layer may be provided as a continuous layer or as a discontinuous layer. When provided as a discontinuous layer, the metal layer is preferably configured such that the metal layer is present in the domains of pressure sensitive adhesive while being absent in domains where the activatable adhesive is provided. Thus in such embodiment, in the pressure sensitive adhesive domains, the pressure sensitive adhesive would be interrupted by the metal layer when the adhesive tape is viewed in a cross-section along the thickness of the adhesive tape. In the domains of activatable adhesive, the activatable adhesive would not be interrupted. Such a configuration may be advantageous in optimizing the strength of the final structural bond created in that no additional interfaces are created in the areas of activatable adhesive.

By the term metal layer in connection with the present invention it is generally understood a metal foil. The metal layer may be of any metal or combination of metals. Suitable metals include for example aluminum, steel, cupper, zinc, tin and the like. The choice of metal foil will typically depend on the nature of components being bonded together as well as on consideration of cost. Typically when one of the components to be bonded is a metal or has a metallic surface, the metal of the metal layer should be chosen such as to avoid potential corrosion problems or to actively inhibit substrate corrosion. The thickness of the metal foil should generally be selected so as to maintain the desired flexibility in the adhesive tape. Conveniently the metal layer will have a thickness between 0.01mm and 0.3mm, preferably between 0.05mm and 0.1mm.

The metal foil may be treated and/or provided with one or more primer layers to improve the adhesion of the pressure sensitive adhesive and/or activatable adhesive composition thereto. Examples of treatments include chemical etching for example acid or alkali treatments for aluminum and anodizing for example chromic acid, sulphuric acid or phosphoric acid anodizing; flame treatments, laser treatment, plasma treatments and irradiation techniques for enhancing surface attachment of adhesives to metal or non-metal foils. The provision of conversion coatings on metals to provide increased durability and improved adhesion may also be employed and these processes could include mechanical, mechano-chemical or flame-chemical surface treatments such as use of a silane applied by flame processing as sold by Pyrosil™ or for aluminum vehicle repair applications as provided by Sura Instruments GmbH, Prussingstrasse 27B D-07745 Jena, Germany. Examples of surface activating and surface protecting primer layers include application of thin layers of silanes, epoxies, phenolics and other preparations and organic and inorganic coatings and passivating layers such as titania and/or zirconia pretreatments as sold by Henkel Corporation under the name Alodine™ 2040 and other similar treatments (see for example Dr Wolf A Roland, Metal Finishing December 1993 p 57. Suitable techniques are outlined for example in RF Wegman "Surface Preparation Techniques for Adhesive Bonding" Noyes , New Jersey USA ISBN 08155-1198-1 and RC Snogren ; Handbook of Surface Preparation, Palmerton Publishing Co. Inc; NY , Library of Congress#73-91040 and by J Dean Minford Handbook of Aluminum Technology and Data; Marcel Dekker ISBN 0-/8247-8817-6.

In accordance with another embodiment of the invention, the metal layer may be dispensed with. An adhesive tape without the metal layer will generally have a lower performance in holding components together while activating the activatable adhesive, in particular while activating the latter with heat. However, an adhesive tape without the metal layer still offers an advantage of improved impact resistance. When no metal layer is present, it may be replaced by another supporting layer such as for example paper, a non-woven, woven or a plastic film. Alternatively, no supporting layer may be used such that both adhesive surfaces of the tape are defined by a single adhesive layer containing domains of pressure sensitive adhesive and domains of activatable adhesive.

In accordance with the present invention, the adhesive tape may further comprise a release liner protecting the adhesive surfaces of the adhesive tape. When the adhesive tape is provided on a roll, the adhesive surfaces can be protected by one release liner have a release surface on both of its major sides. If the adhesive tape is provided in sheet form, it will typically be desired to provide a release liner on both major sides of the adhesive tape. As release liner, any of the release liners suitable for protecting a pressure sensitive adhesive surface may be used. Typically such release liner will be a paper or plastic film having a silicone release surface or a low surface energy polymeric film containing no silicone for example in applications where the use of silicones is not desired such as in manufacturing lines where painting occurs. Suitable non-silicone containing release liners include for example fluoropolymer based release liners or polyolefins.

The adhesive tape can be manufactured by providing domains of pressure sensitive adhesive on a release liner and coating the remaining portions of the release liner with an activatable adhesive composition so as to obtain an adhesive layer defined by domains of pressure sensitive adhesive and activatable adhesive. If it is desired to have a metal layer in the adhesive tape, the so obtained adhesive layer may be laminated on both sides of a metal foil. It will be appreciated by one skilled in the art that the adhesive layer laminated to both sides may be of a different configuration or may be composed of pressure sensitive and activatable adhesive of different compositions. Alternatively, when a metal layer is used the adhesive tape may be manufactured by providing domains of pressure sensitive adhesive on the metal layer instead of on a release liner and then subsequently coating the remaining portions of the metal layer with an activatable adhesive composition. Also, when coating the remaining portions of the release liner or metal layer with the activatable adhesive composition, it will generally be desired to cover the domains of pressure sensitive adhesive on the release liner or metal layer with a further release liner to avoid contamination of the pressure sensitive adhesive domains with the activatable adhesive composition.

The domains of pressure sensitive adhesive may be coated on the release liner or metal layer by a suitable coating technique or the domains may be formed by die cutting a continuous pressure sensitive adhesive layer to remove portions of the pressure sensitive adhesive thereby forming domains that can subsequently be filled with the composition of activatable adhesive.

Still further, if an adhesive tape is desired having a discontinuous metal layer, a pressure sensitive adhesive layer may be laminated or coated on both sides of a metal foil. The metal foil having a pressure sensitive adhesive layer on both of its major sides may then be die cut to remove portions of the pressure sensitive adhesive layer and metal foil. The so created gaps can then be filled with the activatable adhesive composition.

### Pressure sensitive adhesive (PSA)

Suitable pressure sensitive adhesive for use with this invention may comply with any of the following characterizations or definitions as used in the art for identifying pressure sensitive adhesives.

One well known means of identifying pressure sensitive adhesives is the Dahlquist criterion. This criterion defines a pressure sensitive adhesive as an adhesive having a 1 second creep compliance of greater than 1 10⁻⁶ cm²/dyne as described in "Handbook of Pressure Sensitive Adhesive Technology", Donatas Satas (Ed.), 2nd Edition, p. 172, Van Nostrand Reinhold, New York, N.Y., 1989, incorporated herein by reference. Alternatively, since modulus is, to a first approximation, the inverse of creep compliance, pressure sensitive adhesives may be defined as adhesives having a Young's modulus of less than 1 10⁶ dynes/cm².

Another well known means of identifying a pressure sensitive adhesive is that it is aggressively and permanently tacky at room temperature and firmly adheres to a variety of dissimilar surfaces upon mere contact without the need of more than finger or hand pressure as described in "Glossary of Terms Used in the Pressure Sensitive Tape Industry" provided by the Pressure Sensitive Tape Council, August, 1985, incorporated herein by reference.

Another suitable definition of a suitable pressure sensitive adhesive is that it preferably has a room temperature storage modulus within the area defined by the following points as plotted on a graph of modulus versus frequency at 25 °C.: a range of moduli from approximately 2 10⁵ to 4 10⁵ dynes/cm² at a frequency of approximately 0.1 radians/sec (0.017 Hz), and a range of moduli from approximately 2 10⁶ to 8 10⁶ dynes/cm² at a frequency of approximately 100 radians/sec (17 Hz) (for example see FIGS. 8-16 on p. 173 of Donatas Satas, "Handbook of Pressure Sensitive Adhesive Technology", 2nd Edition, Van Nostrand Rheinhold, New York (1989).

The pressure sensitive adhesive used in connection with the present invention is preferably an acrylic based pressure sensitive adhesive but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D.Satas, Ed. Satas and Associates, Warwick RI/USA, 1989 on pages 550-556 and 423-442 respectively.

Particular examples of suitable pressure sensitive adhesives useful in the pressure sensitive adhesive domains include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylene-propylene-diene polymers, and styrenebutadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Adhesives that may be used to bond to substrates having a low surface energy or oily surfaces, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins.

Still further pressure sensitive adhesive that may be particularly useful for adhesion to an oily surface are disclosed in WO 95/13331. The pressure sensitive adhesive disclosed in WO 95/13331 comprises the polymerization product of:
(a) 25-97 parts by weight of an acrylic acid ester of a monohydric alcohol whose homopolymer has a T_{g} of less than 0°C;
(b) 3-75 parts by weight of a non-polar ethylenically unsaturated monomer whose homopolymer has a solubility parameter of no greater than 10.50 and a Tg greater than 15°C; and
(c) 0-5 parts by weight of a polar ethylenically unsaturated monomer whose homopolymer has a solubility parameter of no greater than 10.50 and a Tg greater than 15°C.

The relative amounts of the acrylic acid ester, non-polar ethylenically unsaturated monomer and the polar ethylenically unsaturated monomer are typically chosen such that the 90°peel adhesion of the pressure sensitive adhesive to a surface provided with 1.5 +/- 0.2 mg/in² oil is greater than 0 after 10 second dwell time at room temperature as measured according to Test procedure B-II described in WO 95/13331. The measurement of the solubility parameter and of the Tg is also disclosed in the PCT application. Examples of suitable polar and non-polar monomers are as described in said PCT application.

Suitable commercially available pressure sensitive adhesives include those commercially available from 3M company under the designation VHB.

### Activatable adhesive composition

The activatable adhesive composition is typically a composition that upon activating provides a structural bond. The structural bond preferably has a T peel strength of at least 50N/25mm, more preferably at least 100N/25mm when tested according to the methods outlined under ASTM D1876. The adhesive composition may be activated by exposure to heat or by irradiating the composition with light, for example visible light, UV-light or by irradiation with e-beam. Upon activation, the adhesive composition may cross-link or cure, i.e. a so-called thermosetting adhesive or the adhesive composition may melt thereby wetting out the surface and forming a bond upon cooling. Still further, the adhesive composition may be comprised of a so-called hybrid material.

The term "thermosetting" as used herein refers to a material, which undergoes a curing reaction that results in a chemical change upon bonding and an increase in the hardness of the material. The term "thermoset" as used herein refers to a thermosetting material, which has been cured. A thermosetting material may generally be bonded by application of heat, actinic radiation such as UV, visible, or infrared, or microwave or X-ray energy.

The term "thermoplastic" as used herein refers to a material which undergoes a physical change upon the application of heat, i.e., the material flows upon bonding and returns to its initial non-flowing state upon cooling. A thermoplastic material is typically bonded by application of heat.

The term "hybrid material" refers to a material which is a combination of at least two components, wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A hybrid material will be described in more detail below. A hybrid material may generally be bonded by application of heat, actinic radiation such as UV, visible, or infrared, or microwave or X-ray energy.

A hybrid material is, for the purpose of the present invention, mutually exclusive of the classes of thermosetting and thermoplastic materials defined herein. In other words, thermosetting materials and any optional additives or thermoplastic materials and any optional additives will be considered non-hybrid materials if they do not meet the definition of hybrid material as defined herein.

### Thermosetting Material

Suitable thermosetting materials include epoxides, urethanes, cyanate esters, bismaleimides, phenolics, including nitrile phenolics, and any combinations thereof.

### Epoxides

Suitable epoxides include those containing at least two 1,2-cyclic ethers. Such compounds can be saturated or unsaturated, aliphatic, aromatic or heterocyclic, or can comprise combinations thereof. Suitable epoxides may be solid or liquid at room temperature.

Compounds containing at least two epoxide groups (i.e., polyepoxides) are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C. A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A- or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Preferred aromatic polyepoxides are the polyglycidyl ethers of polyhydric phenols, such as the series of diglycidyl ethers of Bisphenol-A commercially available from Shell Chemical Inc., Houston, Tex., for example, under the trade designations "EPON 828" and "EPON 1001 F" and the series of diglycidyl ethers of Bisphenol-A and Bisphenol F and their blends commercially available from Shell Chemical Inc., for example, under the trade designations "Epikote 232" and "Epikote 1001" available from Shell Chemical Inc., Pemis, The Netherlands. Other useful commercially available aromatic epoxides include the "DER" series of Bisphenol epoxides, and "DEN" series of epoxy novolak resins available from Dow Chemical, Midland, Mich., diglycidyl ether of fluorene Bisphenol, available from Shell Chemical Inc., Houston, Tex., under the trade designation "EPON HPT Resin 1079", a triglycidyl derivative of p-aminophenol commercially available from Ciba Performance Polymers, Brewster, N.Y. under the trade designation "MY 0500", a tetraglycidyl derivative of methylene dianiline commercially available from Ciba Performance Polymers, Brewster, N.Y. under the trade designation "MY 720". Flame retardant epoxides may also be used, for example, the flame retardant brominated Bisphenol-A diglycidyl ether commercially available from Dow Chemical, Midland, Mich., under the trade designation "DER 580". The term "derivative" as used herein with reference to thermosetting materials refers to a base molecule with additional substituents that do not interfere with the thermosetting bonding of the base molecule.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Union Carbide Corp., Danbury, Conn., under the trade designation "ERL", such as vinyl cyclohexene dioxide ("ERL-4206"), 3,4-epoxycyclohexylmethyl-3,4-epoxycyclohexane carboxylate ("ERL-4221 "), 3,4-epoxy-6-methylcyclohexylmethyl-3,4-epoxy-6-methylcyclohexane carboxylate ("ERL-4201"), bis(3,4-epoxy-6-methylcycylohexylmethyl)adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy)butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pa. or "Poly bd" from Elf Atochem, Philadelphia, Pa.), epoxidized aliphatic polyurethanes, and epoxy silicones, e.g., dimethylsiloxanes having cycloaliphatic epoxide or glycidyl ether groups.

Examples of suitable epoxide-based bondable layers that are commercially available in film form include those available from Minnesota Mining and Manufacturing Company ("3M"), St. Paul, Minn. under the trade designation "3M Scotch-Weld Structural Adhesive Film" including those having the following "AF" designations: "AF 42", "AF 111 ", "AF 126-2", "AF 163-2", "AF 3109-2", "AF 191", "AF 2635", "AF 3002", "AF 3024", and "AF 3030FST".

In one embodiment, a thermosetting activatable adhesive comprises a fusible epoxide prepolymer (which can melt and flow unlike a B stage resin) which is a solid at room temperature and, more preferably, further comprises a second epoxide component which may be solid or liquid at room temperature. Suitable solid fusible epoxide prepolymers include those described above which are a solid at room temperature.

An exemplary activatable adhesive composition may comprise a solid fusible epoxide prepolymer comprising a diglycidyl ether of Bisphenol A alone or in combination with a diglycidyl ether of Bisphenol A or Bisphenol F or a blend thereof. The activatable adhesive composition is a solid at room temperature after the addition of any optional components, more preferably the epoxide material (comprising single or multiple epoxides) is a solid at room temperature.

### Urethane Materials

The term "urethane materials" as used herein applies to polymers made from the reaction product of a compound containing at least two isocyanate groups (-N.dbd.C.dbd.O), referred to herein as "isocyanates", and a compound containing at least two active-hydrogen containing group. Examples of active-hydrogen containing groups include primary alcohols, secondary alcohols, phenols and water; and primary and secondary amines (which react with the isocyanate to form a urea linkage). A wide variety of isocyanate-terminated materials and appropriate co-reactants are well known, and many are commercially available (see for example, Gunter Oertel, "Polyurethane Handbook", Hanser Publishers, Munich (1985)).

In order to prepare storage-stable bondable layers based on urethane materials it is preferable to use either an isocyanate or an active hydrogen-containing compound that is blocked. The term "blocked" as used herein refers to a compound that has been reacted with a second compound (i.e. "blocking group") such that its reactive functionality is not available until such time as the blocking group is removed, for example by heating, or by further reaction, such as with water. Examples of blocked isocyanates include those that have been co-reacted with phenol, methyl ethyl ketoxime, and epsilon-caprolactam. Examples of blocked active-hydrogen containing compounds include aldehyde or ketone blocked amines (known as ketimines); aldehyde blocked aminoalcohol (known as oxazolidines); and amines that have been complexed with a salt such as sodium chloride.

When blocked isocyanates are used, examples of suitable co-reactants include polyether polyols such as poly(oxypropylene) glycols, ethylene oxide capped poly(oxypropylene) glycols, and poly(oxytetramethylene) glycols; diamino poly(oxypropylene) glycols; aromatic amine terminated poly(propylene ether) glycols; styrene-acrylonitrile graft polyols; poly(oxyethylene) polyols; polyester polyols such as polyglycol adipates, polyethylene terephthalate polyols, and polycaprolactone polyols; polybutadiene polyols, hydrogenated polybutadiene polyols, polythioether polyols, silicone carbinol polyols, polybutylene oxide polyols, acrylic polyols, carboxy-functional polypropylene oxide polyols, carboxy functional polyester polyols; and aromatic amine-terminated poly(tetrahydrofuran). Suitable urethane resins include blocked urethanes such as that available under the trade designation "Adeka Resin QR-9276" from Asahi Denka Kogyo K. K. Tokyo, Japan, and urethane modified epoxides such as that available under the trade designation "Rutapox VE 2306" from Rutgers Bakelite GmbH, Duisburg, Germany.

### Cyanate Ester Materials

Suitable cyanate ester materials (monomers and oligomers) are those having two or more - OCN functional groups, including those described in U.S. Pat. No. 5,143,785, incorporated herein by reference. Examples of suitable cyanate ester compounds include the following: 1,3-and 1,4-dicyanatobenzene; 2-tert-butyl-1,4-dicyanatobenzene; 2,4-dimethyl-1,3-dicyanatobenzene; 2,5-di-tert-butyl-1,4-dicyanatobenzene; tetramethyl-1,4-dicyanatobenzene, 4-chloro- 1,3-dicyanatobenzene; 1,3,5-tricyanatobenzene; 2,2, -or 4,4, - dicyanatobiphenyl; 3,3', 5,5',-tetramethyl-4,4',-dicyanatobiphenyl; 1,3-, 1,4-, 1,5-, 1,6-, 1,8-, 2,6-, or 2,7-dicyanatonaphthalene; 1,3,6-tricyanatonaphthalene; bis(4-cyanatophenyl)methane; bis(3-chloro-4-cyanatophenyl)methane; bis(3,5-dimethyl-4-cyanatophenyl)methane; 1,1-bis(4-cyanatophenyl)ethane; 2,2-bis(4-cyanatophenyl)propane; 2,2-bis(3,5-dibromo-4-cyanatophenyl)propane; 2,2-bis(4-cyanatophenyl)-1,1,1,3,3,3-hexafluoropropane; bis(4-cyanatophenyl)ether; bis(4-cyanatophenoxyphenoxy)benzene; bis(4-cyanatophenyl)ketone; bis(4-cyanatophenyl)thioether; bis(4-cyanatophenyl)sulfone; tris(4-cyanatophenyl)phosphite; and tris(4-cyanatophenyl)phosphate. Polycyanate compounds obtained by reacting a phenol-formaldehyde precondensate with a halogenated cyanide are also suitable.

Other suitable materials include cyanic acid esters derived from phenolic resins as described in U.S Pat. No. 3,962,184, cyanated novolac resins derived from novolac resins as described in U.S. Pat. No. 4,022,755, cyanated bisphenol-type polycarbonate oligomers derived from bisphenol-type polycarbonate oligomers as described in U.S. Pat. No. 4,026,913, cyanato-terminated polyarylene ethers as described in U.S. Pat. No. 3,595,900, dicyanate esters free of ortho hydrogen atoms as described in U.S. Pat. No. 4,740,584, mixtures of di-and tricyanates as described in U.S. Pat. No. 4,709,008, polyaromatic cyanates containing polycyclic aliphatics as described in U.S. Pat. No. 4,528,366, fluorocarbon cyanates as described in U.S. Pat. No. 3,733,349, and other cyanate compositions as described in U.S. Pat. Nos. 4,195,132 and 4,116,946, all of which are incorporated herein by reference. An exemplary commercially available material is a cyanate ester available from Ciba Performance Polymers, Brewster, N.Y. under the trade designation "Quatrex 7187".

### Phenolic Materials

Suitable phenolic resins are generally described in Encyclopedia of Polymer Science and Engineering, Volume 11, John Wiley & Sons, Inc. (New York, 1988), pp. 45-92. Phenolic-based resins are generally described in Alphonsus V. Pocius, Adhesion and Adhesives Technology: An Introduction, Hanser Publishers (New York, 1997), pp.185-188. Preferred phenolic resins that can be used to impregnate a sheet which is suitable to prepare hot press laminated products from wood veneers are discussed in U.S. Pat. No. 1,960,176, incorporated herein by reference. Suitable phenolic materials are those made as the reaction product of phenols and formaldehydes, including resole phenolics and novolac phenolics. Examples of phenols include phenol, resorcinol, para-substituted phenol, cresol, and the reaction product of bisphenol A and the monoglycidyl ether of bisphenol A. Exemplary phenolic-based bondable layers include tissue paper impregnated with a thermosetting phenolic resin at a ratio of approximately two parts resin to one part tissue paper commercially available under the trade designation "Phenolic Glue Film" from Dyno Overlays Inc., High Point, N.C.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of suitable alkaline catalysts for preparing resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermnoplastic resins rather than thermosetting resins, they can react with other chemicals (e.g., hexamethylenetetraamine) to form a thermoset resin.
Examples of useful commercially available resole or novolac phenolic resins include "Varcum" from BTL Specialty Resins Corporation, Blue Island, I11.; "Arofene" from Ashland Chemical Company, Columbus, Ohio; "Bakelite" from Union Carbide, Danbury, Conn.; and "Resinox" from Monsanto Chemical Company, St. Louis, Mo.
Suitable nitrile phenolic materials include those made by including butadiene-nitrile elastomers in novolac phenolic resin-based materials. Examples of suitable nitrile phenolic based bondable layers that are commercially available in film form include those available from Minnesota Mining and Manufacturing Company ("3M"), St. Paul, Minn. under the trade designation "3M Scotch-Weld Structural Adhesive Film" and having the following "AF" designations: "AF 10", "AF 30", "AF 31" and "AF 32".

### Bismaleimide Materials

Examples of suitable bismaleimide materials, also known as N,N'-bismaleimide monomers and prepolymers, include the N,N'-bismaleimides of 1,2-ethanediamine, 1,6-hexanediamine, trimethyl-1,6-hexanediamine, 1,4-benzenediamine, 4,4'-methylene-bis(benzenamine), 2-methyl-1,4-benzenediamine, 3,3'-methylene-bis(benzenamine), 3,3'-sulfonyl-bis(benzenamine), 4,4'-sulfonyl-bis(benzenamine), 3,3'-oxy-bis(benzenamine), 4,4'-oxy-bis(benzenamine), 4,4'-methylene-bis(cyclohexanamine), 1,3-benzenedimethanamine, 1,4-benzenedimethanamine, and 4,4'-cyclohexane-bis(benzenamine) and mixtures thereof; Other N,N'-bis-maleimides and their process of preparation are described in U.S. Pat. Nos. 3,562,223; 3,627,780; 3,839,358; and 4,468,497, all of which are incorporated herein by reference. Representative examples of commercially available bismaleimide materials include the series of materials available from Shell Chemical, Houston, Tex. under the trade designation "COMPIMIDE" such as 4,4'-bismaleimidodiphenyl methane ("COMPIMIDE Resin MDAB"), and 2,4'-bismaleimidotoluene ("COMPIMIDE Resin TDAB"), and from Dexter/Quantum, San Diego, Calif. under the trade designation "Q-Bond".

### Curatives for Thermosetting Materials

A thermosetting bondable layer preferably comprises a thermosetting material and a curative or curatives. The term "curative" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 80° C.), or react at lower temperatures only after an activation step such as exposure to actinic radiation. This allows the adhesive composition to be readily mixed and coated at room temperature (about 23.+-.3° C.) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids; and phenolic materials as described above. Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methyl-butane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, Pa., under the trade designations, "Amicure CG-1200", "AMICURE CG-1400", "Ancamine 2337", "Ancamine 2441", "Ancamine 2014"; and those from Asahi Denka Kogyo K. K. Tokyo, Japan, under the trade designations "Ancamine 4338S" and "Ancamine 4339S"; those from CVC Specialty Chemicals, Mapleshade, N.J., under the trade designations "Omicure U-52" and "Omicure U-410" as well as the other materials in the "Omicure" series; those from Landec, Menlo Park, Calif., under the trade designations "Intellimer 7001 ", "Intellimer 7002", "Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, N.J., as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material. Representative blocked Lewis acids include BF₃ -monoethylamine, and the adducts of HSbF₅ X, in which X is halogen, --OH, or --OR¹ in which R¹ is the residue of an aliphatic or aromatic alcohol, aniline, or a derivative thereof, as described in U.S. Pat. No. 4,503,211, incorporated herein by reference.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Pat. No. 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. Still other cationic photocatalysts include an ionic salt of an organometallic complex in which the metal is selected from the elements of Periodic Group IVB, V13, VIB, V1113 and VIIIB which is described in European Patent Application 109,581. A suitable photochemically activated curative is a curative commercially available from Ciba-Geigy, Hawthorne, N.Y. under the trade designation "Irgacure 261".

Suitable curatives for urethane materials include the nitrogen-containing curatives as described for use with epoxides (which can react with a blocked isocyanate isocyanate group after the deblocking reaction to give a urea) as well as, for example, materials containing hydroxyl (e.g., phenols) or thiol functionality that can react with the deblocked isocyanate. Photochemically activated generators of protic or Lewis acids can be used to enhance these reactions.

Suitable curatives for cyanate ester materials include the nitrogen-containing curatives as described for use with epoxides as well as curatives that may be thermally or photochemically activated. Examples of such curatives include organometallic compounds containing a cyclopentadienyl group (C₅ H₅) and derivatives of a cyclopentadienyl group. Suitable curatives include cyclopentadienyl iron dicarbonyl dimer ([C₅ H₅ Fe(CO)₂ ]₂), pentamethylcyclopentadienyl iron dicarbonyl dimer ([C₅ (CH₃)₅ Fe(CO)₂ ]₂), methylcyclopentadienyl manganese tricarbonyl (C₅ H₄ (CH₃)Mn(CO)₃), cyclopentadienyl manganese tricarbonyl (C₅H₅ Mn(CO)₃), all of which are available from Strem Chemical Company, Newburyport, Mass. Other suitable curatives include the hexafluorophosphate salt of the cyclopentadienyl iron mesitylene cation (C₅ H₅ (mesitylene)Fe.sup.+ PF₆), and the trifluoromethanesulfonate salt of the cyclopentadienyl iron mesitylene cation (C₅ H₅ (mesitylene)Fe.sup.+ (CF₃ SO₃.sup.-)), both of which may be prepared by methods described in U.S. Pat. No. 4,868,288 which is incorporated herein by reference.

Suitable curatives for phenolic materials and for nitrile phenolic materials include hexamethylene tetraamine (a latent source of formaldehyde) as well as combinations of organic acids (e.g. phosphoric acid, para toluene sulfonic acid, and salicylic acid) and metallic oxides (e.g. zinc oxide and magnesium oxide).

Suitable curatives for bismaleimide materials include the nitrogen containing curatives as described for use with epoxides as well as latent sources of allyl phenol.

### Thermoplastic Materials

In an alternative embodiment, the activatable adhesive composition may be based on a thermoplastic material. Suitable thermoplastic materials include, for example, polyesters, ethylene vinyl acetate (EVA), polyurethanes, polyamides, polyolefins, and derivatives thereof. The term "derivative" as used herein with reference to thermoplastic materials refers to a base molecule with additional substituents that are not reactive towards a crosslinking or polymerization reaction.
Thermoplastic materials, by nature, typically do not require curatives.

### Hybrid Materials

A hybrid material is a combination of at least two components wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A first component is a crosslinkable material and a second component is (a) a thermoplastic material, (b) monomers, oligomers, or polymers (and any required curative) which can form a thermoplastic material, (c) a thermosetting material, i.e., monomers, oligomers, or prepolymers (and any required curative) which can form a thermosetting material. The second component is chosen so that it is not reactive with the first component. It may be desirable, however, to add a third component which may be reactive with either or both of the crosslinkable material and second component for the purpose of, for example, increasing the cohesive strength of the bonded hybrid material.

Suitable first components include thermosetting materials, for example, the thermosetting materials described above, as well as crosslinkable elastomers such as acrylics and urethanes as described above.

Suitable thermoplastic second components include those thermoplastic materials described above. Suitable thermoplastics which can be formed in situ, i.e., with monomers, oligomers, or polymers (and any required curative) which can form a thermoplastic material without undergoing any significant crosslinking reaction would be readily apparent to one skilled in the art. Exemplary hybrid materials incorporating a second component (a) are described, for example, in PCT/EP98/06323; U.S. Pat. No. 5,709,948, and U.S. Ser. No. 09/070,971, all of which are incorporated herein by reference. Exemplary hybrid materials incorporating a second component (b) are described, for example, in U.S. Pat. No. 5,086,088, which is incorporated herein by reference. Example 1 of U.S. Pat. No. 5,086,088 illustrates an example of a thermoplastic material formed in situ.

Suitable thermosetting second components include those thermosetting materials described above. Exemplary hybrid materials incorporating a second component (c) are described, for example, in U.S. Pat. No. 5,494,981, which are incorporated herein by reference.

A particularly preferred activatable adhesive composition is an epoxy based composition as disclosed in US 6,506,494. Thus, in this embodiment, the activatable adhesive composition comprises:
A an epoxy resin capable of being cured to a cured epoxy resin when exposed to an activated latent curative system;
B. a latent curative system in an amount sufficient to cure said epoxy resin, comprising (a) at least one epoxy resin miscible first curative comprising a latent hardener, selected from dicyandiamide and its derivatives, contained substantially as a core within a multiplicity of ambient-temperature-stable, impermeable microcapsules having capsule walls comprised of a thermoplastic polymeric material and (b) at least one epoxy resin latent second curative comprising a latent accelerator which is a metal imidazolate compound. The metal imidazolate may be a compound of the formula:
   MLₘ
wherein M is a metal selected from the group of Ag(I), Cu(I), Cu(II), Cd(II), Zn(II), Hg(II), Ni(II) and Co(II),
L is an imidazolate of the formula: 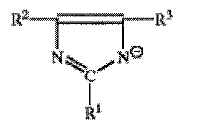 wherein R¹, R², and R³ are selected from a hydrogen atom, an alkyl radical or aryl radical and m is the valence of M, in an amount sufficient when activated to cure said epoxy resin admixed uniformly within said curable epoxy resin, wherein the microcapsule walls isolate the first curative from the second curative.

### Use of the adhesive tape

The adhesive tapes in connection with the present invention can be used to provide a structural bond between components of a motor vehicle. Examples of motor vehicles include for example those that drive on a road such as cars, buses, trucks, vans as well as other motor vehicles such as boats, ships, aircraft etc. The adhesive tapes may nevertheless also be used in creating structural bonds in other structural materials such as for example industrial machinery, furniture, road-signs, roadside furniture, glazing or supermarket shelving.

The adhesive tapes in connection with the present invention may be designed in various configurations, some of which are illustrated with reference to the following figures. Figure 1 shows a top view of a first embodiment of the adhesive tape. Adhesive tape 10 comprises contiguous parallel bands or stripes of a pressure sensitive adhesive 11 and an activatable adhesive 12.

Figure 2 shows an alternative embodiment in which adhesive tape 20 comprises spots of activatable adhesive composition within a matrix of pressure sensitive adhesive 21. Figure 3 shows a cross-section along line A-B of the adhesive tape shown in figure 1. As can be seen, the adhesive tape 10 comprises a metal foil 15 provided on both sides an adhesive layer defined by the stripes of pressure sensitive adhesive 11 and activatable adhesive composition 12.

Alternatively, the metal foil layer can be provided discontinuous as shown in figure 4. Adhesive tape 30 comprises the metal foil 35 only between pressure sensitive adhesive domains 32a and 32b. The domains of activatable adhesive composition 31 are not interrupted by the metal foil and thus run throughout the thickness of the tape from one major side to the other.

The invention is further illustrated with reference to the following examples without however intending to limit the invention thereto.

### EXAMPLES

### Preparation of Test Assemblies

For the test assembly preparation , used in all tests with exception of the side impact test, hot dip galvanized steel panels (available as HDG70G70U from ACT Laboratories Inc, Hillsdale, Michigan, U.S.A.) were selected. The steel panels were first dipped in a tank filled with MEK (Methyl Ethyl Ketone) solvent and then their steel surfaces cleaned with either paper towels or lint-free cloths. Panels were then allowed to dry at room temperature (23 +/- 2 °C) for 30 minutes before assembling them with adhesive sheets.

For the side impact test assembly preparation 1.6 mm thick aluminium panels (available as 2024T3 from Q-Panel Lab Products, Cleveland, Ohio U.S.A) were selected. The aluminium panels were first treated with 3M Scotchbrite™ 7447 until a constant surface appearance was obtained. This was followed by a wipe with isopropyl alcohol using either paper towels or lint-free cloths. Panels were then allowed to dry at room temperature (23 +/- 2 °C) for 30 minutes before assembling them with adhesive sheets.

### Test Methods

### A. Tests on uncured adhesive materials

### Temperature Resistance

An adhesive sheet (25.4mm x 25.4 mm) as described was placed between two 0.8 mm (0.30 inch) thick zinc hot dip galvanized steel panels. Each of these test assemblies were pushed together by hand and conditioned at 23 °C and 50% relative humidity for 24 hours before testing.

The test assembly was held vertically and a load was hooked at end of one test panel so that shearing forces were exerted on the tape according to the procedure described in American Society of Testing and Materials (ASTM) D 6463 - 99. The load (specified in each of the examples) was variable and measured in kg weight.
The test assembly was placed in an air oven held at 180 °C. The measurement of holding time was initiated once the load was hooked onto the test panel. Time to failure of the bond was measured and recorded in MIN (minute).

### B. Tests on cured adhesive materials

### Dynamic Overlap Shear

An adhesive sheet (25.4 mm x 12.7 mm) as described under the Examples and Comparative Examples was placed between two 0.8 mm (0.30 inch) thick zinc hot dip galvanized steel panels. Each of these test assemblies were pushed together by hand and conditioned at 23°C and 50% relative humidity for 24 hours before testing.

The test assemblies were then placed in a forced air oven and the temperature was raised to 180 °C according to the following programmed profile:
- The oven temperature was ramped to 40 °C in 1 minutes and held at 40 °C for 1 minute
- The oven temperature was further increased to 180 °C in 10 minutes and held at 180°C for 20 minutes
- The oven temperature was then decreased to 40 °C in 5 minutes and the curing cycle of the adhesive was completed.

The cured test assemblies were conditioned at 23°C and 50% relative humidity for 24 hours prior to testing.
The dynamic overlap shear test was conducted according to Society of Automotive Engineers (SAE) Test Method J1523 (or ASTM D1002). The test laminate was pulled apart in the shear mode using a tensile tester at a crosshead speed of 50 mm / min (2 in./min). The test was conducted in an identical manner for samples aligned in the machine direction (MD) and cross web direction (CD).

Tests were repeated three times on each direction and the results averaged. Results were recorded in PSI (pound per square inch).

### T- Peel Adhesion

An adhesive sheet (25.4 mm x 76.2 mm) as described under the Examples and Comparative Examples was placed between two 0.8 mm (0.30 inch) thick zinc hot dip galvanized steel panels. Each of these test assemblies were pushed together by hand and conditioned at 23°C and 50% relative humidity for 24 hours before testing.

The test assemblies were placed in a forced air oven and the temperature was raised to 180 °C according to the following programmed profile:
- The oven temperature was ramped to 40 °C in 1 minutes and held at 40 °C for 1 minute
- The oven temperature was further increased to 180 °C in 10 minutes and held at 180°C for 20 minutes
- The oven temperature was then decreased to 40°C in 5 minutes and the curing cycle of the adhesive was completed

The cured test assemblies were conditioned at 23°C and 50% relative humidity for 24 hours prior to testing.
T-peel adhesion was conducted according to Test Method ASTM 1876. The cured test assemblies were subjected to a T-peel measurement using a tensile tester with a crosshead speed of 50 mm / min (2 in. /min). The test was conducted in an identical manner for samples aligned in the machine direction (MD) and cross web direction (CD).
Tests were repeated three times on each direction and the results averaged. Results were recorded in PIW (pound per inch wide).

### Impact Resistance

An adhesive sheet (25mm X 25mm), covered by a release liner (25 mm X 40 mm) having a 16 mm diameter hole in its center, was placed between two 1.6 mm thick aluminium 2024T3 panels.

Each of the test assemblies were pushed together by hand and conditioned at 23°C and 50% relative humidity for 24 hours before testing.
The test assemblies were then placed in a forced air oven and the temperature was raised to 180 °C according to the following programmed profile:
- The oven temperature was ramped to 40 °C in 1 minutes and held at 40 °C for 1 minute
- The oven temperature was further increased to 180 °C in 10 minutes and held at 180°C for 20 minutes
- The oven temperature was then decreased to 40°C in 5 minutes and the curing cycle of the adhesive was completed

The cured test assembly were conditioned at 23°C and 50% relative humidity for 24 hours prior to testing.

The impact test was conducted according to General Motors Engineering Standard
GM 9751P, with a slight modification in the test assembly preparation being the addition of the 25mm x 40 mm release liner with a centred hole of 16 mm diameter.
As a result of this modification the joint area tested in rotational shear impact was 16mm diameter giving a contact area of 201.06mm². The typical impact resistance of a high impact adhesive for this size of joint is commonly about 5.75J.

### MATERIALS USED

### Acrylic Pressure-Sensitive Adhesives

The acrylic pressure sensitive adhesives (PSA) used for the examples are all commercially available from the 3M Company (St. Paul, MN/USA).

VHB 9473 is a very firm, clear acrylic transfer tape, having an average tape thickness of 0.25mm and a liner thickness of 0.10mm. The adhesive will resist mild acids and alkalis, most oils, greases, hydraulic fluids and other typical aromatic and aliphatic hydrocarbon and ketone solvents .The 180° Peel adhesion to steel, measured according to ASTM D-3330, averages 14.2 N/10mm and Static Shear Strength to steel measured with 3.23 sq cm overlap at RT , according to FINAT test method No.8, results in a failure time > 10.000+ minutes.

**VHB 9469** is a very firm, clear acrylic transfer tape, having an average tape thickness of 0.13 mm and a liner thickness of 0.10mm. The adhesive will resist mild acids and alkalis, most oils, greases, hydraulic fluids and other typical aromatic and aliphatic hydrocarbon and ketone solvents .The 180° Peel adhesion to steel, measured according to ASTM D-3330, averages 13.1 N/10mm and Static Shear Strength to steel measured with 3.23 sq cm overlap at RT, according to FINAT test method No.8, results in a failure time > 10.000+ minutes.

**VHB 9472LE** is a clear, high strength acrylic transfer tape, having an average tape thickness of 0.13 mm and a liner thickness of 0.10 mm .The special acrylic adhesive of this tape shows good adhesion values to oily surfaces. Typical 90° peel adhesion values (in N/cm) according to ASTM D-3330 after 15 minutes dwell time at room temperature from stainless steel average 11.9 N/cm.

**VHB 4910** is a clear acrylic foam tape having an average tape thickness of 1.10 mm and a red film liner with a thickness of 0.08mm. The foam density averages 960 k/gm³. The 90° Peel adhesion to steel at RT with 72 hr dwell time has a common value of 26 N/10mm.

**VHB 4950** is a white acrylic foam tape having an average tape thickness of 1.0 mm and liner with a thickness of 0.13mm. The foam density averages 800 k/gm³. The 90° Peel adhesion to steel at RT with 72 hr dwell time has a common value of 44 N/10mm

### Epoxy Film Adhesive

The green, structural adhesive film SAF™ 6045 is a modified epoxy film adhesive and is commercially available from the 3M Company (St. Paul, MN/USA).

SAF™ 6045 has a nominal thickness of 0.3 with % solids of the non-cured adhesive being about 98+%.
Typical overlap shear values measured initial at 23°C, after having the sample cured at 165°C for 15 minutes plus 10 minutes oven ramp, are depending on the substrate, between 15.3 MPa and 19.0 MPa.

### Example 1

A 1 meter wide web of acrylic pressure-sensitive adhesive (PSA) transfer tape having a thickness of 0.25 mm, commercially available as VHB 9473 from 3M Company (St. Paul, MN/USA), was placed between two continuous siliconized paper liners (an upper liner and a lower liner). The sheet thus prepared was scored with a rotary die cutting process so as to provide multiple cuts in a down-web direction to a depth such the upper liner and the transfer tape were severed completely and only the lower liner remained intact. The down-web cuts were provided at intervals of 6.4 mm (1/4 inch).

Every second PSA strip (and its associated upper liner) was then removed and discarded. A continuous lower liner remained bearing 6.4 mm (¼ inch) wide strips of PSA tape spaced 6.4 mm (1/4 inch) apart. Each remaining PSA strip was protected on its upper surface by a remaining strip of upper liner having the same dimensions as the upper surface of the PSA strip.

The web then was passed between two rollers and compressed slightly.
The spaces between the PSA tape strips were then filled with a thermally-curable epoxy structural adhesive composition available commercially as SAF 6045 from 3M Company, St. Paul, MN/USA The epoxy composition had a viscosity of about 394 Pa-s at a temperature of ca. 90 °C.

Heated structural adhesive was filled into the gaps between the PSA strips using a hot-melt knife coater. The web prepared above was fed to the coater with the PSA strips oriented in the down-web direction. The gap on the coater was set at a thickness roughly equivalent to that of the combined thickness of the continuous lower liner, the PSA strip and its upper liner. Thus the spaces between the PSA strips were filled with structural adhesive, but virtually no structural adhesive was coated on top of the linered PSA strips. This resulted in the spaces between the PSA strips being completely filled with structural adhesive, i. e. so that the upper surface of the resulting striped adhesive composite was roughly planar.

The remaining upper liner strips were then removed from the upper surface of the PSA, leaving a striped adhesive composite supported on a continuous liner. A second continuous liner was then placed on top of the composite sheet. The composite adhesive tape has a thickness of ca. 300 µm (10-14 mils). The portion of the web surface area comprising PSA was 50 % and the structural adhesive comprised 50 %.

The adhesive composite was then tested according to the methods described under test Methods above. Test results are shown in Table 2

### Example 2

Example was repeated with the exception that an alternate version of acrylic pressure-sensitive adhesive tape was employed: VHB 4910, a pressure-sensitive adhesive tape from 3M Company, St. Paul, and MN/USA.

The resulting striped adhesive composite had a thickness of ca. 1100 µm (40-45 mils). The portion of the web surface area comprising PSA was 50 % and the structural adhesive comprised 40 %.
Test results are summarized in Table 2.

### Example 3

Example was repeated with the exception that an alternate version of acrylic pressure-sensitive adhesive tape was employed: VHB 4950, pressure sensitive adhesive foam tape from 3M Company, St. Paul, and MN/USA.
The tape composite had a thickness of ca. 1180µm (45-48 mils). The portion of the web surface area comprising PSA was 50 % and the structural adhesive comprised 50 %. Test results are summarized in Table 2

### Example 4

A continuous sheet of acrylic foam pressure-sensitive adhesive tape (VHB 4950) protected by a continuous upper liner and a continuous lower liner was subjected to a rotary die cutting process. Circles having a diameter of 9.6 mm (3/8 inch) were cut into the liner-PSA -liner construction so that the lower liner remained in tact. The cut "plugs" were then removed. The holes formed by this process were then filled with the structural adhesive material described in Example 1 (SAF 6045) by a hot melt process. The portion of the web surface area comprising PSA was 55 % and the structural adhesive comprised 45 %. The composite had a thickness of ca. 1200µm (45-48 mils).
Test results are summarized in Table 2.

### Examples 5-6

Examples 5-6 were prepared in manner essentially the same as Example 4 with the exception that an acrylic pressure-sensitive adhesive tape having a 12.5 µm (0.5 mil) thick intermediate layer of aluminium foil embedded in the tape was employed as a starting web. This pressure-sensitive adhesive tape is available as VHB 9469 (from 3M Company, St. Paul/MN, USA).
Both Examples 5 and 6 comprised dots or plugs of structural adhesive in a PSA matrix. There was no aluminium foil in the structural adhesive "plugs". In Example 5, the structural adhesive "dots" had a diameter of 6.4mm (¼ inch) and occupied 20 % of the total surface area of the composite. In Example 6, the structural adhesive "dots" had a diameter of 6.4 mm (¼ inch) and occupied 40 % of the total surface area of the composite. The composites had a thickness of ca. 300 µm (10.5 - 14.5 mils).
Test results are summarized in Table 2.

### Examples 7-8

Examples 7 and 8 were also prepared using the acrylic pressure-sensitive adhesive (PSA) tape comprising a 12.5µm (0.5 mil) thick aluminium foil. Both Examples 7 and 8 employed the alternating strip pattern of pressure-sensitive adhesive (PSA) and structural adhesive of the general geometry described in Example 1. The PSA stripes were 15,9 mm wide in Example 7 and 20,6 mm wide in Example 8. Area occupied by the structural adhesive was 60 % and 80 %, respectively.
The composites had a thickness of ca. 300 µm (10.5 -14.5 mils).
Test results are summarized in Table 2.

### Comparative Example 1

Structural adhesive alone. Formed a good structural bond, but had no temperature resistance.

**Table 1**

| Example | Type | Surface area, % | | PSA Tape employed |
|---|---|---|---|---|
| | | Pressure-sensitive adhesive | Structural adhesive | |
| 1 | Stripes | 50 | 50 | 3M VHB 9473 |
| 2 | Stripes | 50 | 50 | VHB 4910 |
| 3 | Stripes | 50 | 50 | VHB 4950 |
| 4 | Spots | 55 | 45 | VHB 4950 |
| 5 | Spots | 80 | 20 | VHB 9469 |
| 6 | Spots | 60 | 40 | VHB 9469 |
| 7 | Stripes | 40 | 60 | VHB 9469 |
| 8 | Stripes | 20 | 80 | VHB 9469 |
| C1 | N/A | 0 | 100 | SAF 6045 |
| N/A = not applicable | | | | |

**Table 2**

| Example | Temp. Resistance | | Overlap Shear (psi) | | | T-Peel adhesion (piw) | | |
|---|---|---|---|---|---|---|---|---|
| | Load (kg/in²) | Hold time (min) | CD | MD | Avg | CD | MD | Avg. |
| 1 | 1.0 | 20 | 1134 | 1387 | 1260 | 29.1 | 25.1 | 27.1 |
| 2 | 0 | 5 | 792 | 428 | 610 | 33.5 | 25.2 | 29.4 |
| 3 | 0 | 5 | 957 | 565 | 761 | 28.1 | 22.4 | 25.3 |
| 4 | 0 | 5 | 994 | 901 | 947 | 28.5 | 26.7 | 27.6 |
| 5 | 2.0 | >1440 | 757 | 651 | 704 | 13.5 | 15.4 | 14.5 |
| 6 | 1.5 | >1440 | 1052 | 1141 | 1097 | 22.1 | 24.1 | 23.1 |
| 7 | 1.0 | >1440 | 1215 | 1833 | 1524 | 32.1 | 28.0 | 30.1 |
| 8 | 0.5 | >1440 | 1313 | 1941 | 1627 | 32.8 | 37.5 | 35.2 |
| C1 | - | - | - | - | - | - | - | - |

The test results shown in table 2 imply, that the fractional difference between Examples 1-4 versus Examples 5-8, is the strongly improved temperature resistance performance of Examples 5-8. Examples 5-8 all have an embedded aluminium foil, whereas Examples 1-4 were made without aluminium foil. This indicates that the presence of an metal foil layer improves the temperature resistance performance significantly.

### Example 9

Example 1 was repeated with the exception that the stripes of VHB 9473 were 9.6 mm (⅜ inch) wide and the structural adhesive only occupied 40 % of the total surface area. Two layers of this composite were then laminated to the opposite surfaces of an aluminium foil in such a manner that stripes of structural adhesive were lying directly opposite stripes of structural adhesive on the other surface. Stripes of PSA were also lying directly opposite other stripes of PSA, thus forming a striped composite with a continuous aluminium foil interlayer.
The composite had a thickness of ca. 600µm (20.5 - 28.5 mils). The geometry of the adhesive composite is summarized in Table 3. The adhesive composite of Example 9 was also tested according to the methods described under Test Methods above. Test results are summarized in Table 4.

### Example 10

Example 9 as repeated, with the exception that the pressure-sensitive adhesive (PSA) stripes had a width of 12.7mm (4/8 inch) and the structural adhesive only occupied 50 % of the total surface area. The composite had a thickness of ca. 600µm (20.5 - 28.5 mils). The geometry of the adhesive composite is summarized in Table 3.
The adhesive composite of Example 10 was also tested according to the methods described under Test Methods above.
Test results are summarized in Table 4.

### Example 11

Example 9 as repeated, with the exception that the pressure-sensitive adhesive stripes had a width of 15.8 mm (5/8 inch) and the structural adhesive only occupied 60 % of the total surface area. The composite had a thickness of ca. 600 µm (20.5 - 28.5 mils). The geometry of the adhesive composite is summarized in Table 3.
The adhesive composite of Example 11 was also tested according to the methods described under Test Methods above.
Test results are summarized in Table 4.

### Examples 12-14

Examples 9-11 were repeated, with the exception that when the composites were laminated to either side of the aluminium foil, they were place in an arrangement so that stripes of structural adhesive were opposite stripes of pressure-sensitive adhesive, i. e. in a staggered geometric arrangement. The composites had a thickness of ca. 600µm (20.5 - 28.5 mils). The geometry of the adhesive composites is summarized in Table 3.

The adhesive composites of Examples 12-14 were also tested according to the methods described under Test Methods above.
Test results are summarized in Table 4.

**Table 3**

| Example | Type | Surface area, % | | PSA Tape employed |
|---|---|---|---|---|
| | | Pressure-sensitive adhesive | Structural adhesive | |
| 9 | Stripes, opposing | 60 | 40 | VHB 9473 |
| 10 | Stripes, opposing | 50 | 50 | VHB 9473 |
| 11 | Stripes, opposing | 40 | 60 | VHB 9473 |
| 12 | Stripes, staggered | 60 | 40 | VHB 9473 |
| 13 | Stripes, staggered | 50 | 50 | VHB 9473 |
| 14 | Stripes, staggered | 40 | 60 | VHB 9473 |

**Table 4**

| Example | Temp. Resistance | | Overlap Shear (psi) | | | T-Peel adhesion (piw) |
|---|---|---|---|---|---|---|
| | Load (kg/in²) | Hold time (min) | CD | MD | Avg | |
| 9 | 1.5 | >1440 | 630 | 1090 | 860 | 24.1 |
| 10 | 1.25 | >1440 | 977 | 1419 | 1198 | 25.1 |
| 11 | 1.0 | >1440 | 1291 | 1710 | 1501 | 30.5 |
| 12 | 1.5 | >1440 | 186 | 178 | 182 | 13.3 |
| 13 | 1.25 | >1440 | 172 | 255 | 214 | 14.8 |
| 14 | 1.0 | >1440 | 889 | 859 | 874 | 17.9 |

### Example 15

As a starting web a continuous sheet of acrylic transfer pressure-sensitive adhesive tape (VHB 9472LE, commercially available from 3M, St.Paul MN) having a 12.5 µm (0.5 mil) thick intermediate layer of aluminium foil embedded in the tape was subjected to a rotary die cutting process. A continuous upper liner and a continuous lower liner protected the tape.

Circles having a diameter of 5.0 mm were cut into the liner-PSA -liner construction so that the lower liner remained in tact. The cut -out circles were then removed, leaving holes of 5.0 mm diameter. The holes formed by this process were then filled with the structural adhesive material described in Example 1 (SAF 6045) by a hot melt process. Hole-to-hole centres were spaced to be 10 mm apart, using a hexagonal packing form. The portion of the web surface area comprising PSA was 68 % and the structural adhesive comprised 32 %.
The composite had a thickness of ca. 550 µm.
Side Impact Test results are summarized in Table 6.

### Comparative Example 2

3M Structural adhesive film SAF 6045 alone.
SAF 6045 is a modified epoxy film adhesive and is commercially available from the 3M Company (St. Paul, MN/USA).
Side Impact Test results are summarized in Table 6.

**Table 5**

| | diameter, mm | Spacing between "dots",mm | Surface % Pressure-Sensitive Adhesive | Surface area % Structural adhesive |
|---|---|---|---|---|
| 15 | 5 | 10 | 68 | 32 |
| C 2 | N/A | N/A | 0 | 100 |
| N/A = not applicable | | | | |

**Table 6**

| Ex. | Impact Resistance, kJ/m² |
|---|---|
| 15 | 8.2 |
| C2 | 2.0 |

### Conclusion on Side Impact Test:

The result of the slightly modified Side Impact Test, based on GM 9751P, demonstrates a large improvement of the impact performance in shear mode.

## Claims

1. Adhesive tape for bonding components together, said adhesive tape comprising a continuous or discontinuous metal layer having opposite first and second major sides, each of said first and second major sides having an adhesive layer defining an adhesive surface on said first and second major sides, said adhesive layer on said first and second major sides comprising domains of pressure sensitive adhesive and domains of an activatable adhesive composition, each of said domains defining a part of the surface of the adhesive layer.

2. Adhesive tape according to claim 1 wherein said metal layer is selected from the group consisting of aluminum foils, zinc foils and steel foils.

3. Adhesive tape according to claim 1 or 2 wherein said metal layer is discontinuous and supporting said domains of pressure sensitive adhesive.

4. Adhesive tape according to any of the previous claims wherein said domains of activatable adhesive composition in said adhesive layer on said first major side are opposite to said domains of activatable adhesive composition in said adhesive layer on said second major side.

5. Adhesive tape according to any of the previous claims wherein said domains of pressure sensitive adhesive and said domains of said activatable adhesive composition together define the total surface of said adhesive layer.

6. Adhesive tape according to any of the previous claims wherein said activatable adhesive composition is capable of being cross-linked upon exposure to heat.

7. Adhesive tape according to any of the previous claims wherein said domains of said activatable adhesive composition form spots within a matrix of pressure sensitive adhesive or wherein said domains of pressure sensitive adhesive form spots within a matrix of the activatable adhesive composition.

8. Adhesive tape according to any of claims 1 to 6 wherein said domains of pressure sensitive adhesive and activatable adhesive composition define a pattern of stripes.

9. Adhesive tape according to any of the previous claims wherein said pressure sensitive adhesive comprises an acrylic pressure sensitive adhesive and/or said activatable adhesive comprises an epoxy resin.

10. Method of adhering components of motor vehicle together, said method comprising (i) providing an adhesive tape between said components to be adhered together, said adhesive tape comprising opposite first and second major adhesive surface, each of said first and second major adhesive surface being defined by an adhesive layer that comprises domains of pressure sensitive adhesive and domains of an activatable adhesive composition, each of said domains defining a part of the surface of the adhesive layer; and (ii) cross-linking said domains of activatable adhesive composition.

11. Method according to claim 10 wherein said adhesive tape is an adhesive tape as defined in any of claims 1 to 9.
